# EUROPEAN PATENT APPLICATION

(11) **EP 4 015 110 A1**
(43) Date of publication of application: **22.06.2022**
(21) Application number: 20214475.4
(22) Date of filing: 16.12.2020
(51) Int. Cl.: B22F 10/20, B22F 10/28, B22F 10/30, B33Y 10/00, B33Y 30/00

(54) **METHOD TO PRODUCE A SINTER STRUCTURE AND SINTER STRUCTURE PRODUCED WITH SUCH A METHOD**

(71) Applicant: ABB Schweiz AG, 5400 Baden (CH)
(72) Inventor: Petrov, Andrey, 8048 Zürich (CH); Agostini, Bruno, 8006 Zürich (CH); Torresin, Daniele, 5400 Baden (CH); Sologubenko, Oleksandr, 8906 Bonstetten (CH)
(74) Representative: Qip Patentanwälte Dr. Kuehn & Partner mbB

(57) **Abstract**

A method to produce a sinter structure (100), comprises steering an energy beam (110) targeted at a surface of a feedstock (114) of loose metal powder grains (108) over an expanse (106) of the sinter structure (100) to heat near-surface grains (108) inside the expanse (106) to a sintering temperature of the metal and fuse the heated grains (108) to a sintered porous metal material (104), wherein an energy exposure of the grains (108) is limited to a sintering energy density inside the expanse (106).

## Description

### FIELD OF THE INVENTION

The invention relates to a method to produce a sinter structure and a sinter structure produced with the said method.

### BACKGROUND OF THE INVENTION

A sinter structure may be prefabricated by molding and pressing a green body made of feedstock metal grains covered by a polymer binding material. The brittle green body may be put in an oven and heated to a sinter temperature. At the sinter temperature the binding material responsible for the green color is removed thermally and the grains fuse together at their contact points. After removal from the oven the sinter structure retains its shape.

Feedstock grains may also be melted selectively by using a steerable energy beam. The beam may heat the grains until they reach a liquid state and dissolve in a melt-pool at a focus of the beam. Once the beam moves on, the molten mass cools and solidifies to a dense weld track embedded in the feedstock.

Multiple touching weld tracks may be melted in the feedstock and multiple layers of weld tracks may be stacked on top of each other to create a three-dimensional metal body.

To create a porous structure, multiple adjoining weld tracks may be created in one layer. The weld tracks may be spaced apart by a desired pore size. To stabilize the structure, spaced tracks of consecutive layers may be oriented in different directions to create junctures between the layers.

### DESCRIPTION OF THE INVENTION

It is an objective of the invention to provide an improved method to produce a sinter structure. This objective is achieved by the subject-matter of the independent claim. Further exemplary embodiments are evident from the dependent claims and the following description.

The invention relates to a method to produce a sinter structure. The method comprises steering an energy beam targeted at a surface of a feedstock of loose metal powder grains over an expanse of the structure. The beam heats near-surface grains inside the expanse to a sintering temperature of the metal. The heated grains are fused together to a sintered porous metal material. An energy exposure of the grains inside the expanse is limited to a sintering energy density.

A porous metal material may consist of interconnected metal grains with interconnected pores in between the grains. The grains may be referred to as particles. The grains may be made out of a metal material. The grains may be sintered together. The metal material may be a copper material or an aluminum material for example. The metal material may be an alloy.

A feedstock may be a bed of metal powder grains. The bed may have a flat surface. The feedstock may contain excess material. Unused material of the feedstock may be reusable.

An energy beam may be an electron beam or a laser beam for example. The energy beam may be pointed at the surface. The energy beam may narrow towards the surface. The energy beam may hit the surface in a spot. In particular, the energy beam may be oriented approximately perpendicular to the surface. The energy beam may be steered across the surface in two dimensions. There may also be multiple energy beams targeted at the surface.

A temperature of the grains may be raised by absorbing energy from the energy beam and by heat conduction from heated grains to adjoining colder grains. Grains at the surface may be heated directly by the beam. Grains under the surface may be heated by the beam and/or the heat conduction.

A sintering temperature may be below a melting temperature. The sintering temperature may be dependent on the feedstock material. For a copper material the sintering temperature may be between 700°C and 1070°C, for an aluminum material the sintering temperature may be between 400°C and 660°C. At the sintering temperature the grains may be still solid. At the sintering temperature contacting surfaces of the grains may interact on an atomic level and fuse together. Fused particles may be still discernible as individual grains. The fused or sintered grains may have grown together at their contact points.

A sinter structure may be defined by a CAD model. The structure may be three-dimensional. The CAD model may be sliced into two-dimensional layers. In each layer the sinter structure may have a cross-section area defined by the CAD model. An expanse of the sinter structure may be equivalent to the cross-section area. The expanse may be defined by borders of the cross-section area. The layers of porous metal material may be embedded in loose feedstock material during the production process. The loose feedstock material may be removed from the sinter structure after the production process.

The invention further relates to a sinter structure produced with the presented method.

In an embodiment the sintered porous metal material has a porosity between 25% and 65%. Particularly the sintered porous metal material has a porosity between 35% and 55%. The sintered porous metal material may have an average porosity of 50%. The sintered porous metal material may be mechanically stable at that porosity.

In an embodiment the sintered porous metal material has a pore size between 10 µm and 75 µm. Particularly the sintered porous metal material has a pore size between 20 µm and 60 µm. The pore size may average 40 µm.

In an embodiment, the energy exposure is limited to a sintering energy density between 2 J/mm³ and 25 J/mm³. The energy exposure may be limited to a sintering energy density between 2/LT J/mm2 and 25/LT J/mm2 where LT is the process layer thickness in mm. In that range the grains may only reach the sintering temperature. The energy density may be raised slowly to facilitate spreading the energy evenly. To reach the melting temperature a higher energy density may be necessary. To reach the melting temperature a melting energy density between 25 J/mm³ and 100 J/mm³ may be necessary. The melting temperature of a copper material may be between 900°C and 2500°C. The melting temperature of an aluminum material may be between 500°C and 2400°C.

In an embodiment, the energy exposure is limited by controlling a size of a spot targeted by the beam. In particular the spot targeted by the beam is controlled by adjusting a focus plane of the beam and/or by using special laser optics which provides a large spot diameter in the focus plane. When the energy beam is focused on the surface, a focus plane of the energy beam coincides with the surface of the feedstock. When the energy beam is focused on the surface, the spot is as small as possible. Since all the power of the energy beam is concentrated in the very small spot, a very high power density may be reached in the small spot. By adjusting the focus plane away from the surface, a bigger spot of the surface is exposed to the energy beam. The power of the energy beam is spread across the bigger spot. By doubling the spot diameter, the power density may be quartered, for example. The focus plane may be adjusted over or under the surface. Thus the laser spot diameter used to produce the porous material may be between 100 µm and 2000 µm, preferably between 160 µm and 500 µm.

In an embodiment, the energy exposure is limited by controlling a power of the beam. A source of the energy beam may be controllable. For example, an electric variable may be adjusted at the source to control a power output of the source. The source may be operated with a power output suitable for material sintering. The power output may be between 20% and 100% of the power output used for melting, or between 200 W and 1000 W.

In an embodiment, the energy exposure is limited by controlling an exposure time of the feedstock to the beam. A duration of the energy beam hitting a spot with a given power density defines the energy exposure of that spot. The shorter the energy beam hits the spot, the smaller the energy exposure will be.

In an embodiment, the exposure time is controlled by steering the beam with a speed particularly beneficial for sintering. The exposure time is defined by the area targeted by the energy beam and a speed of movement of that area across the surface. The exposure time decreases with an increase of the speed. If the speed is doubled, the exposure time is halved. Thus, to maximize the build rate of the porous material the steering speed may be set to maximum and the laser power may be adjusted accordingly to achieve sintering instead of melting. For example, the steering speed may reach 4000-20000 mm/s, preferably between 7000 and 10000 mm/s, depending on the laser optical system

In an embodiment, the laser is operated in a pulse mode and the exposure time is controlled by pulsing the beam in a sintering duty cycle. The energy beam may be switched on and off or pulsed. A ratio of active time and inactive time may be referred to as duty cycle. The active time may be referred to as pulse length. The duty cycle may be used to control an average power output of the source of the energy beam. As the energy beam moves across the surface, a given spot on the surface may be exposed to a number of pulses. A cumulation of all the pulse lengths amounts to the total exposure time. The sintering duty cycle may be between 50% and 100%, where 100% represents a continuous laser mode,

In an embodiment, the energy beam is steered across the expanse in at least two passes. Each spot within the expanse may be exposed to the energy beam at least two times. The energy beam may be steered along a different track each pass. The tracks may be offset by a fraction of a beam diameter, preferably between 1% and 50% of the beam diameter. That way, the areas exposed to the energy beam in consecutive passes overlap and a spot on the surface hit by a border area of the energy beam in the first pass will be hit again by the next pass.

In an embodiment, the energy beam is steered along differently orientated tracks each pass. The tracks may be angled transverse to each other. For example, if the energy beam is steered across the expanse in two passes, the tracks may be oriented about 90° to each other. If the energy beam is steered across the expanse in three passes, the tracks may be angled about 60° to each other.

In an embodiment, there is a cooling interval between each pass or each time the energy beam is steered across one spot. A cooling interval may be referred to as heat dispersion time. During the cooling interval, heat generated by a previous exposure to the energy beam may spread into the feedstock and result in a more even heating of the grains. That way, a temperature tolerance around the sintering temperature may be maintained.

In an embodiment, the method further comprises covering the surface with a layer of additional feedstock. The covering may result in a new, even surface of the feedstock. The new surface may be offset from the old surface by a thickness of the layer. The energy beam may be steered across the new surface to heat grains in the new layer. The heated grains may fuse to each other and to grains on the old surface. This process may be repeated until the three-dimensional sinter structure is buried in the bed of unused feedstock.

In an embodiment, a powder with a predetermined grain size distribution is used as feedstock to define a desired pore size of the porous metal structure. the pore size is dependent on grain size. Bigger grains result in bigger pores. A mixture of different sized grains results in smaller pores than the biggest grains would result in.

If the sinter structure contains a dense metal portion, in an embodiment the method comprises steering the beam over an area of the portion to heat the near-surface grains inside the area at least to a melting temperature of the metal. The grains melt to a melt-pool, which cools to a dense metal material. The energy exposure inside the area is raised to a melting energy density. A dense portion may be a structural part of the sinter structure. The dense portion may be a support structure for the porous structure. The dense portion may also be a casing or shell for the porous metal material. The dense portion may be connected to the porous metal material. A melting energy density may be much higher than the sintering energy density. The melting energy density may be between 30 J/mm³ to 70 J/mm³. The melting energy density may be reached by focusing the energy beam onto the surface of the feedstock. The energy beam may also be steered with a melting speed and/or operated with a melting duty cycle. The melting speed and/or melting duty cycle may be standard operation parameters for selective laser melting.

A further aspect of the invention relates to a two-phase cooling device, such as a vapor chamber or a loop heat pipe. A two-phase cooling device, and/or a vapor chamber may have a solid enclosure comprising at least two solid plates and a porous structure in between the two solid plates. Also, a porous wicking structure may cover an inner surface of the vapor chamber. The purpose of the porous structure may be to return the working fluid from the cold end (condenser, one of the solid plates) to the hot end (evaporator, the other one of the solid plates), by exerting a capillary force against the pressure difference between the hot end and the cold end.

The method presented herein may be used for manufacturing of fine porous structures for the two-phase cooling device. The method presented herein also may be used for manufacturing the solid plates and/or optional a stiffening structure between the two solid plates.

The method may comprise laser settings and laser scanning strategies for a powder bed fusion additive manufacturing process which produces fine porous structures suitable for use in two-phase cooling devices like heat pipes, thermosyphons, 2D and 3D vapor chambers and loop heat pipes. The described laser parameters and scanpath strategies allow for producing ultrafine porous structures (<50 µm pore size), while preserving high porosity (>50%) and mechanical integrity of the porous structure.

These and other aspects of the invention will be apparent from and elucidated with reference to the embodiments described hereinafter.

### BRIEF DESCRIPTION OF THE DRAWINGS

The subject matter of the invention will be explained in more detail in the following text with reference to exemplary embodiments which are illustrated in the attached drawings.
Fig. 1 schematically shows the production of a sinter structure according to an embodiment;
Fig. 2 schematically shows the production of a dense metal portion of the sinter structure according to an embodiment;
Fig. 3 schematically shows an adjustment of a focus plane according to an embodiment;
Fig. 4 schematically shows multiple passes of an energy beam according to an embodiment; and
Fig. 5 schematically shows a correlation between an energy density and a porosity of a sinter structure according to an embodiment.

The reference symbols used in the drawing, and their meanings, are listed in summary form in the list of reference symbols. In principle, identical parts are provided with the same reference symbols in the figure.

### DETAILED DESCRIPTION OF EXEMPLARY EMBODIMENTS

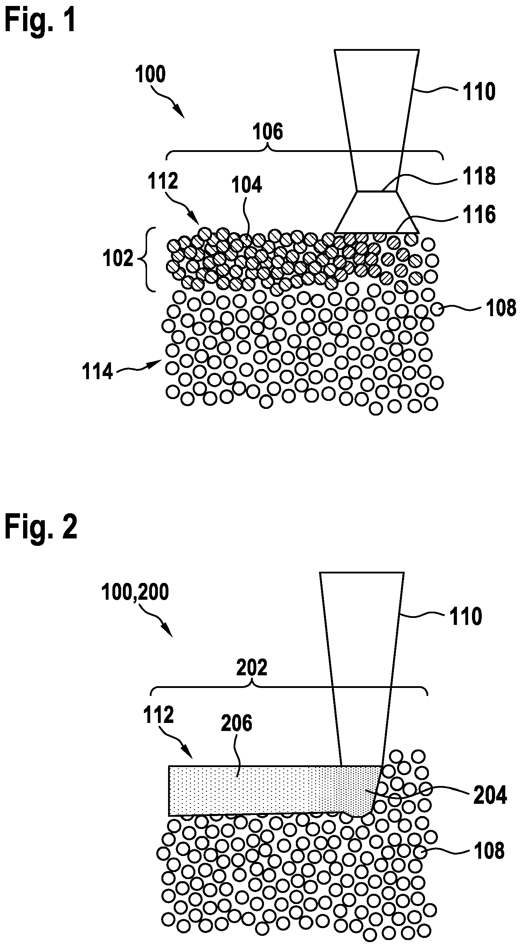

Fig. 1 schematically shows the production of a sinter structure 100 according to an embodiment. The sinter structure 100 may be referred to as porous metal structure. The sinter structure 100 is produced in layers 102 of a porous metal material 104 by additive manufacturing. Each layer 102 is produced by selectively heating a predetermined expanse 106 of metal powder grains 108 to a sintering temperature to sinter them to the porous metal material 104. The expanse 106 on each layer 102 is determined by a boundary of the sinter structure 100 on that layer 102. Using a CAD file of the sinter structure 100, an energy beam 110 is steered over the expanse 106 to heat the metal powder grains 108 within the expanse 106 to the sintering temperature. To heat the whole expanse 106, the energy beam 110 is steered along adjoining tracks 112 within the expanse 106. Here the energy beam 110 is a laser beam but can also be an electron beam, for example.

The metal powder grains 108 are supplied as loose feedstock 114. The feedstock 114 is bigger than the expanse 106 of the porous metal structure 100. The expanse 106 is heated to the sintering temperature by absorbing energy from the beam 110. Near-surface metal powder grains 106 reach the sintering temperature and fuse together.

The sintered porous metal material 104 along the track 112 forms one layer 102 of the sinter structure 100. Additional layers 102 of the sinter structure 100 are created by burying the surface under a new layer 102 of new feedstock 114 metal powder grains 108 and heating the expanse 106 of metal powder grains 108 in the new layer 102 to the sintering temperature by steering the energy beam 110 across the surface of the new layer 102 within the expanse 106. The heated metal powder grains 108 sinter together at the sintering temperature and form the porous metal material 104 in the track 112 of the energy beam 112. The sintering temperature reaches deeper into the feedstock than the layer 102 is thick, to ensure sintering to the porous metal material 104 in the layer 102 below.

The sintering temperature may be controlled by limiting a sintering energy density in the metal powder grains 108. In an embodiment, the sintering energy density is controlled by limiting an energy exposure of the surface. The energy exposure is dependent on a power density in a spot 116 targeted by the energy beam 110 and a duration of exposure to the energy beam 110.

The power density is dependent on a total power of the energy beam 110 and a size of the spot 116 targeted by the energy beam 110. If the power of the energy beam 110 is invariable, the power density can be adjusted by adjusting the size of the spot 116. In an embodiment, the power density is reduced by enlarging the size of the spot 116. The size of the spot 116 may be enlarged by defocusing the energy beam 110. Here a focus plane 118 of the energy beam 110 is arranged at a distance from the surface of the feedstock 114 to create a sintering spot 116 size. In the focus plane 118 the energy beam 110 has its smallest extent. In the focus plane 118 the energy beam 110 has its highest power density. When the defocused energy beam 110 hits the surface, the extent of the energy beam 110 is bigger than in the focus plane 118. Accordingly, the power density of the defocused energy beam 110 is lower than the power density of the focused energy beam 110. The extent of the defocused energy beam 110 on the surface equates the size of the spot 116. Alternatively, the focus plane 118 can also be arranged inside the feedstock 114. That way, the energy beam 110 never reaches its smallest extent and highest power density.

The duration of exposure is dependent on a speed of lateral movement of the energy beam 110 and the size of the spot 116. In an embodiment the speed of the lateral movement is increased to a sintering speed to lower the duration of exposure. With the sintering speed, the spot 116 passes each point on the surface quicker.

Fig. 2 schematically shows the production of a dense metal portion 200 of the sinter structure 100 of fig 1. Using the CAD file, the energy beam 110 is steered over an area 202 of the portion 200 to heat the metal powder grains 108 within the area 202 higher than a melting temperature. When the metal powder grains 108 exceed the melting temperature, they liquefy and dissolve into a melt pool 204 at the spot 116 hit by the energy beam 110. If the area 202 is wider than the spot 116, the energy beam 110 is steered along adjoining tracks 112 within the area 202. When the spot 116 moves on, the melt pool 204 cools and hardens into a dense metal material 206.

To reach a melting power density inside the area 202, the energy beam 110 is focused on the surface to maximize the power density in the spot 116. In an embodiment, the speed of the energy beam 110 is reduced to a melting speed inside the area 202.

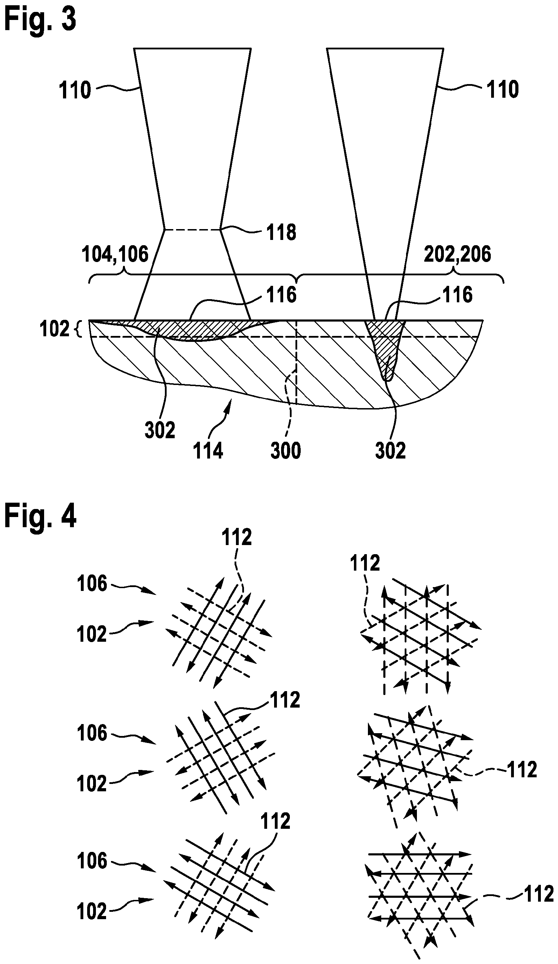

Fig. 3 schematically shows an adjustment of a focus plane 118 at a border 300 between an expanse 106 of porous metal material 104 and an area 202 of dense metal material 206. Crossing the border 300 from the dense metal material 206 to the porous metal material 104, the focus plane 118 is shifted away from the surface of the feedstock 114.

In the area 202 of the dense metal material 206 the energy beam 110 is concentrated on a small spot 116 with a high power density. The small spot 116 leads to a heat-affected zone 302 that reaches deep into the feedstock 114 but has a small diameter.

In the expanse 106 of porous metal material 104 the energy beam 110 hits a wide spot 116 with a low power density. The wide spot 116 leads to a shallow heat-affected zone 302 with a big diameter. The shallow heat-affected zone 302 is still deeper than a layer 102.

Fig. 4 schematically shows multiple passes of an energy beam according to an embodiment. The multiple passes over one layer 102 are shown on a top view of fig. 1. The energy beam is steered along multiple parallel tracks 112 in each pass. The tracks 112 of each pass are angled to the tracks 112 of the other passes.

In an embodiment, the expanse 106 is subject to a double pass. The energy beam is steered two times over each point of the expanse 106. The tracks 112 of each pass are arranged transverse to each other. In particular, the tracks 112 of each pass are oriented perpendicular to each other.

In an embodiment, the expanse 106 is subject to a triple pass. The energy beam is steered three times over each point of the expanse 106. The tracks 112 of the three passes are angled 60° to each other.

In an embodiment, the tracks 112 of consecutive layers 102 are rotated by an increment in relation to each other. In particular, the tracks of a double pass layers are rotated 30° from layer 102 to layer 102. The tracks 112 of triple pass layers 102 are rotated 15° from layer 102 to layer 102.

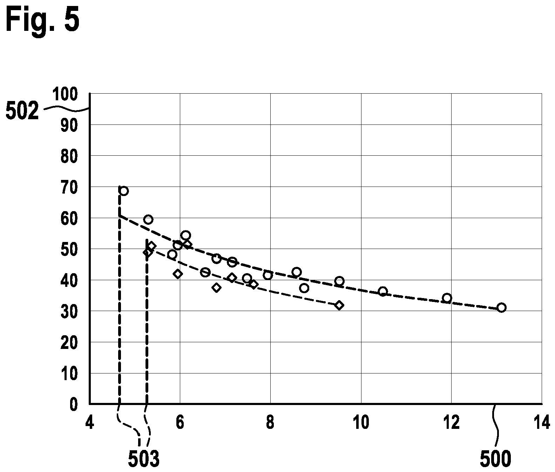

Fig. 5 schematically shows a correlation between an energy density 500 and a porosity 502 of a sinter structure according to an embodiment. The correlation is diagrammed in a diagram. The energy density 500 is plotted on the x-axis of the diagram in J/mm³ and the porosity 502 is plotted on the y-axis of the diagram in percent. The porosity 502 raises with falling energy density 500. The porosity 502 rises until a lack of fusion limit 503 of the energy density 500 for sintering the metal powder grains is reached. With double passes the achieved porosity 502 is higher and the minimum energy density 500 is lower.

The method presented herein may be used for manufacturing of fine porous structures for two-phase cooling devices. The method may comprise laser settings and laser scanning strategies for a powder bed fusion additive manufacturing process which produces fine porous structures suitable for use in two-phase cooling devices like heat pipes, thermosyphons, 2D and 3D vapor chambers and loop heat pipes. The described laser parameters and scanpath strategies allow for producing ultrafine porous structures (<50 µm pore size), while preserving high porosity (>50%) and mechanical integrity of the porous structure.

In a conventional powder bed fusion additive manufacturing process the material is heated up above the melting point and a stable weld track is achieved. Thus, in the areas of the powder bed which were exposed to the laser, a near-dense or fully dense weld track is formed, which by itself does not exert any capillary power. The presented approach describes a method which allows to overcome the described above limitations and which is based not on stable weld tracks but on powder grain sintering, where the powder material is slowly heated by the laser to reach the sintering temperature close to the melting point, which causes fusion without forming a melt pool typical for an SLM process. Thus, the laser-affected area will exhibit small pore size and large porosity at the same time, since the effective pore diameter in this case will be defined not by a hatch distance or other laser parameter, but by the size distribution of the powder used as a feedstock.

For achieving the mild powder grain sintering, the linear and volumetric energy density is significantly reduced. For instance, a typical weld-track based process for AlSiMg requires energy densities of 25-70 J/mm3 to be applied. This is significantly higher than the energy required for reaching the melting point of AlSiMg, which is around 2-25 J/mm3, depending on the absorption coefficient. Hence, if very low energy density is applied to the powder, the weld track fusion mode will be replaced by a different fusion mode which is described here as powder grain sintering mode.

With regard to the practical implementation, this mild laser heat treatment may be achieved in various ways. With low velocities (<500 mm/s) at very low power (<<100W) a very low build rate is achieved, and the fusion depth may be only sufficient to bond consecutive layers with a small layer thickness.

A typical laser spot size in a SLM machine can be in the 70-100 µm range. To allow for high build rates while maintaining a large layer thickness (30 µm and more) and high productivity, the laser can be utilized with a large spot size and large power of up to 1kW. Alternatively, the laser focus may be shifted above or below the printing plane, which will in turn increase the effective laser spot size. The energy density decreases quadratically with increasing laser spot size and hence the powder grain sintering mode (2-15 J/mm3) can be achieved at full laser power (400-1000 W) and high scan rates (800 mm/s and above). The larger laser spot also heats the powder material more homogeneously, which is advantageous for the powder grain sintering.

The large spot laser in the grain sintering mode produces a highly homogeneous porous structure with largely preserved initial powder size distribution.

To increase the homogeneity, porosity and robustness of the porous structure, at least two exposures per layer with a large laser spot may be used. The laser scan tracks of the consecutive exposures within the same layer are preferably tilted with respect to each other by 180/N degrees, where N is the number such of exposures. The scan tracks between consecutive layers can be tilted with respect to each other.

Multiple exposures improve the robustness of the porous structure by achieving 20% (abs.) higher porosity before a lack of fusion occurs (< 5 J/mm3), while the pore size in the powder grain sintering mode is defined by the powder size via the empiric formula (Dpore=0.4^{∗}Dpowder), which for example with a 20-63 µm powder is in the range 8-25 µm. Hence the described above laser strategy allows for producing fine porous structures suitable for high-performance two-phase cooling devices.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practicing the claimed invention, from a study of the drawings, the disclosure, and the appended claims. In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

### LIST OF REFERENCE SYMBOLS

- 100: sinter structure
- 102: layer
- 104: porous metal material
- 106: expanse
- 108: metal powder grains
- 110: energy beam
- 112: track
- 114: feedstock
- 116: spot
- 118: focus plane

- 200: portion
- 202: area
- 204: melt pool
- 206: dense metal material

- 300: border
- 302: heat-affected zone

- 500: energy density
- 502: porosity

## Claims

1. A method to produce a sinter structure (100), comprising:
steering an energy beam (110) targeted at a surface of a feedstock (114) of loose metal powder grains (108) over an expanse (106) of the sinter structure (100) to heat near-surface grains (108) inside the expanse (106) to a sintering temperature of the metal and fuse the heated grains (108) to a sintered porous metal material (104), wherein an energy exposure of the grains (108) inside the expanse (106) is limited to a sintering energy density.

2. The method of claim 1,
wherein the energy exposure is limited to a sintering energy density between 2 J/mm³ and 25 J/mm³.

3. The method of one of the previous claims,
wherein the energy exposure is limited by controlling a size of a spot (116) targeted by the beam (110), in particular by adjusting a focus plane (118) of the beam (110).

4. The method of one of the previous claims,
wherein the energy exposure is limited by controlling an exposure time of the feedstock (114) to the beam (110).

5. The method of claim 4,
wherein the exposure time is controlled by steering the beam (110) with a sintering speed.

6. The method of one of the claims 4 to 5,
wherein the exposure time is controlled by pulsing the beam (110) in a sintering duty cycle.

7. The method of one of the previous claims,
wherein the beam (110) is steered across the expanse (106) in at least two passes.

8. The method of claim 7,
wherein the beam (110) is steered along differently orientated tracks (112) in each pass.

9. The method of one of the claims 7 to 8,
wherein there is a cooling interval between each pass.

10. The method of one of the previous claims, further comprising:
covering the surface with a layer (102) of additional feedstock (114).

11. The method of claim 10,
wherein grains (108) with a predetermined grain size distribution are used as feedstock (114) to define a desired pore size of the porous metal structure (100).

12. The method of one of the previous claims,
wherein, if the sinter structure (100) contains a dense metal portion (200), the method further comprises:
steering the beam (110) over an area (202) of the portion (200) to heat the near-surface grains (108) inside the area (202) at least to a melting temperature of the metal and melting the grains (108) to a melt-pool (204), which cools to a dense metal material (206), wherein the energy exposure is raised to a melting energy density inside the area (202).

13. A sinter structure (100) produced with the method of one of the previous claims.

14. The sinter structure (100) of claim 13,
wherein the sintered porous metal material (104) has a porosity between 25% and 65%, particularly between 35% and 55%.

15. The sinter structure (100) of one of the claims 13 to 14,
wherein the sintered porous metal material (104) has a pore size between 10 µm and 75 µm, particularly between 20 µm and 60 µm, particularly averaging 40 µm.
